# EUROPEAN PATENT APPLICATION

(11) **EP 3 396 521 A1**
(43) Date of publication of application: **31.10.2018**
(21) Application number: 16877603.7
(22) Date of filing: 12.12.2016
(51) Int. Cl.: G06F 3/06

(54) **DATA INFORMATION PROCESSING METHOD, AND DATA STORAGE SYSTEM**

(30) Priority: 22.12.2015 CN 201510973964
(71) Applicant: Alibaba Group Holding Limited, Grand Cayman (KY)
(72) Inventor: LI, Shengfeng, Hangzhou Zhejiang 311121 (CN); YUAN, Panfeng, Hangzhou Zhejiang 311121 (CN); CHEN, Tingliang, Hangzhou Zhejiang 311121 (CN); LI, Ji, Hangzhou Zhejiang 311121 (CN)
(74) Representative: Finnegan Europe LLP
(86) International application number: PCT/CN2016/109400
(87) International publication number: WO 2017/107792

(57) **Abstract**

The present application discloses a data information processing method. A storage space corresponding to an organization is disposed in a data storage system. A data processing request type, the storage partition in which a project sending a data processing request is located, and the storage partition of the target data information corresponding to the data processing request are acquired when the data processing request is received. Subsequently, a processing strategy matching the storage partitions and the type is acquired. Finally, the target data information is processed according to the processing strategy and the data processing request. Thus, the isolation and rights control of different data in the same storage space can be achieved, and the security and mobility of data can be ensured

## Description

### Technical Field

The present application relates to the field of network communications, and in particular, to a data information processing method. The present application further relates to a data storage system.

### Background Art

Cloud computing is becoming increasingly popular in various industries, and the use of various big data scenarios is becoming increasingly widespread. Therefore, platform operators have a growing need to use and exchange data. This has given rise to the exchange or transaction of data between different companies or enterprises. In current technologies, independent units (for example, e-commerce companies, Independent Software Vendors (ISV) or the like) that have full resource management rights are referred to as organizations.

Currently, most data-oriented application scenarios solve problems of data storage and computing. A data escrow service provider has to face the problem of how to provide security guarantees and sound management during data exchanges. In particular, when the transaction or transfer of sensitive data in a public data market involves the secure change of ownership and attribution between different organizations, how to enable authorized access to data or exchange changes to data between different Data Providers (DP) or within one DP while ensuring security becomes a technical problem that urgently needs to be resolved by persons skilled in the art.

### Summary of the Invention

The present application provides a data information processing method, to perform differentiated control processing of different data information while improving the security of the data information. The method is applied to a data storage system in which a storage space corresponding to an organization is disposed. The storage space includes a first storage partition and a second storage partition. The method includes:
acquiring a data processing request type, the storage partition in which a project sending a data processing request is located, and the storage partition of the target data information corresponding to the data processing request when the data processing request is received;
acquiring a processing strategy matching the storage partitions and the type, the processing strategy being preset in the data storage system; and
processing the target data information according to the processing strategy and the data processing request.

Preferably,
the data processing request is used to authorize the target data information to the project if the data processing request type is an authorization request, to enable the project to access the target data information, the project belonging to the organization;
the data processing request carries target attribute information if the data processing request type is a change request, and the data processing request is used to change attribute information of the target data information to the target attribute information; and
the data processing request is used to present the target data information on a data platform if the data processing request type is a presentation request.

Preferably, the processing strategy is specifically:
allowing execution of the data processing request if the storage partition of the target data information is the first storage partition when the data processing request is a presentation request or a change request;
allowing execution of the data processing request if the storage partition in which the project is located belongs to the storage space when the data processing request is an authorization request and the storage partition of the target data information is the first storage partition; and
allowing execution of the data processing request if the storage partition in which the project is located belongs to the second storage partition when the data processing request is an authorization request and the storage partition of the target data information is the second storage partition.

Preferably, the method further includes:
rejecting and discarding the data processing request if a processing strategy matching the storage partitions and the type does not exist.

Preferably, the method further includes:
importing uploaded new data into the first storage partition when the new data is received.

Correspondingly, the present application further provides a data storage system. The data storage system is a data storage system in which a storage space corresponding to an organization is disposed. The storage space includes a first storage partition and a second storage partition. The system includes:
a first acquisition module configured to acquire a data processing request type, the storage partition in which a project sending a data processing request is located, and the storage partition of target data information corresponding to the data processing request when the data processing request is received;
a second acquisition module configured to acquire a processing strategy matching the storage partitions and the type, the processing strategy being preset in the data storage system; and
a processing module configured to process the target data information according to the processing strategy and the data processing request.

Preferably,
the data processing request is used to authorize the target data information to the project if the data processing request type is an authorization request, to enable the project to access the target data information, the project belonging to the organization;
the data processing request carries target attribute information if the data processing request type is a change request, and the data processing request is used to change attribute information of the target data information to the target attribute information; and
the data processing request is used to present the target data information on a data platform if the data processing request type is a presentation request.

Preferably, the processing strategy is specifically:
allowing execution of the data processing request if the storage partition of the target data information is the first storage partition when the data processing request is a presentation request or a change request;
allowing execution of the data processing request if the storage partition in which the project is located belongs to the storage space when the data processing request is an authorization request and the storage partition of the target data information is the first storage partition; and
allowing execution of the data processing request if the storage partition in which the project is located belongs to the second storage partition when the data processing request is an authorization request and the storage partition of the target data information is the second storage partition.

Preferably,
the processing module is further configured to reject and discard the data processing request when a processing strategy matching the storage partitions and the type does not exist.

Preferably, the system further includes:
an import module configured to import uploaded new data into the first storage partition when the new data is received.

As can be seen, by applying the technical solution of the present application, a storage space corresponding to an organization is disposed in a data storage system. A data processing request type, the storage partition in which a project sending a data processing request is located, and the storage partition of target data information corresponding to the data processing request are acquired when the data processing request is received. Subsequently, a processing strategy matching the storage partitions and the type is acquired. Finally, the target data information is processed according to the processing strategy and the data processing request. Thus, the isolation and rights control of different data in the same storage space can be achieved, and the security and mobility of data can be ensured.

### Brief Description of the Drawings

FIG. 1 is a schematic flowchart of a data information processing method according to the present application;
FIG. 2 is a schematic diagram of a data exchange support model according to a specific embodiment of the present application;
FIG. 3 is a schematic diagram of the exchange of data between partitions according to a specific embodiment of the present application;
FIG. 4 is a schematic diagram of data security monitoring in an exchange partition according to a specific embodiment of the present application;
FIG. 5 is a schematic diagram of an authorization strategy for data between partitions according to a specific embodiment of the present application;
FIG. 6 is a schematic flowchart of the use of data in an exchange partition (with a private partition) according to a specific embodiment of the present application;
FIG. 7 is a schematic flowchart of the use of data in an exchange partition (without a private partition) according to a specific embodiment of the present application;
FIG. 8 is a schematic flowchart of the use of data in a private partition according to a specific embodiment of the present application; and
FIG. 9 is a schematic structural diagram of a data storage system according to the present application.

### Detailed Description

As discussed in the Background Art, the security control over the ownership, attribution, and use rights of existing data is not complete. Currently, a scenario in which data is exchanged may exist. However, the exchange of massive amounts of data information between organizations on a public cloud computing platform cannot be ensured, and the effective protection of the ownership and attribution of data cannot be ensured.

In view of the foregoing problem that exists in the prior art, the present application provides a data information processing method. A data storage system in which a storage space corresponding to an organization is disposed in advance is provided. Data in the data storage system is not merely stored separately by using different organizations. According to the storage spaces of the organizations, the data is distributed between two storage partitions with different rights. That is, the storage space includes a first storage partition and a second storage partition, and the data information is separately stored in the two partitions. It should be noted here that, because the purpose of the present application is to resolve the problems of rights allocation and control in the aspects of data information transactions and exchanges, the "organization" in the present application may be an individual user or a company user. Different specific forms do not affect the protection scope of the present application.

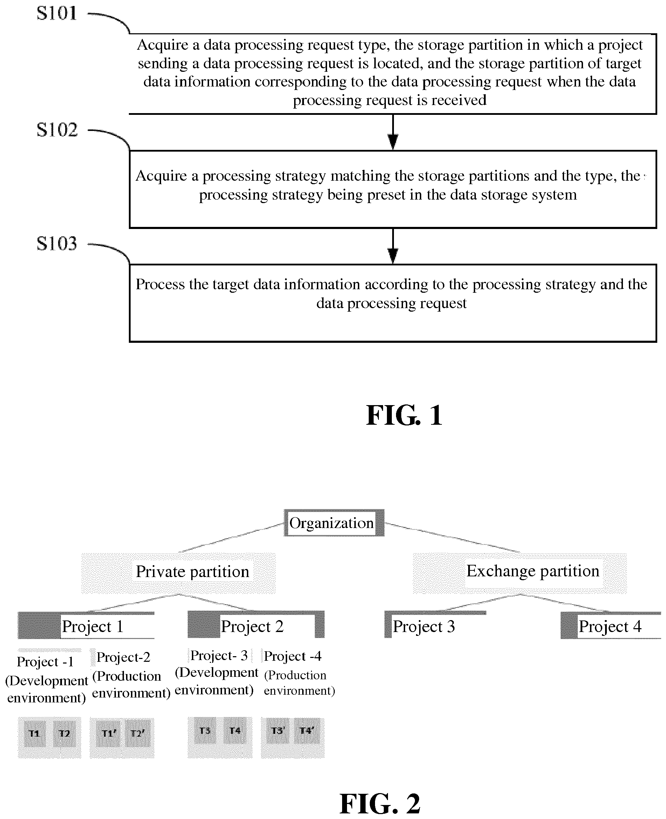

As shown in FIG. 1, the method includes the following steps.

S101: A data processing request type, the storage partition in which a project sending a data processing request is located, and the storage partition of the target data information corresponding to the data processing request are acquired when the data processing request is received.

In the data exchange support model provided in a specific embodiment of the present application shown in FIG. 2, all data of a same organization in the data storage system is stored in specific partitions (a private partition and an exchange partition). Subsequently, the functions of exchanging and trading data in a market can be provided based on this model.

All data that needs to be exchanged or traded in the data storage system belongs to a specific organization. One specific organization includes two logic areas: a private partition and an exchange partition. A series of use and exchange actions such as processing, shelving, and trading is performed on all the data of the organization in only these two partitions. Correspondingly, a given project space must also be in a specific partition (the private partition or the exchange partition). Once a project space is created, a PROJECT developed or exchanged in the project space and tables in the PROJECT (for example, T1 and T2 here) all belong to the partition.

The first storage partition is set as the private partition and the second storage partition is set as the exchange partition in the foregoing specific embodiment. However, a person skilled in the art may make other variations or adaptive adjustments based on this. These variations or adaptive adjustments all fall within the disclosure scope of the present application.

Based on different data information in different storage partitions, different operation types are defined for operations on data information in the preferred embodiments of the present application, and they specifically include the following three types:

### (1) Authorization request

A data processing request of an authorization request type can be initiated when a project of an organization needs to use data information in another partition. The data processing request is used to authorize the target data information to the project, to enable the project to access the target data information, the project belonging to the organization.

### (2) Change request

The organization to which data information belongs and some other information will change after the data information is purchased by an organization from another organization. In the technical solution of the present application, operations are performed by using backend data. Therefore, information can be changed once data information is purchased. A data processing request carries target attribute information. The data processing request is used to change attribute information of the target data information (associated with the original organization) to the target attribute information (associated with an organization to which the data is transferred or transacted).

### (3) Presentation request

In the process of selling or transferring data information, it may be necessary to present the data to another person to browse. Therefore, a data presentation request is used to present the target data information on a data platform.

S102: A processing strategy matching the storage partitions and the type is acquired, the processing strategy being preset in the data storage system.

Based on the different types of data processing requests provided in S101, in this step, the storage partition in which data information is currently located is used to perform processing strategy matching. Corresponding processing strategies are set in advance for different storage partitions and types. Therefore, in this step, it is only necessary to query a matching processing strategy according to the storage partitions and type. However, it can be determined that a processing strategy matching the storage partitions and the type does not exist if a corresponding processing strategy is not found, and the data processing request can be rejected and discarded.

To distinctively process request types such as authorization, change, and presentation, in the preferred embodiments of the present application, the processing strategy is set as follows:
(1) Execution of the data processing request is allowed if the storage partition in which the project is located belongs to the storage space when the data processing request is an authorization request and the storage partition of the target data information is the first storage partition.
(2) Execution of the data processing request is allowed if the storage partition in which the project is located belongs to the second storage partition when the data processing request is an authorization request and the storage partition of the target data information is the second storage partition.
(3) Execution of the data processing request is allowed if the storage partition of the target data information is the first storage partition when the data processing request is a presentation request or a change request.

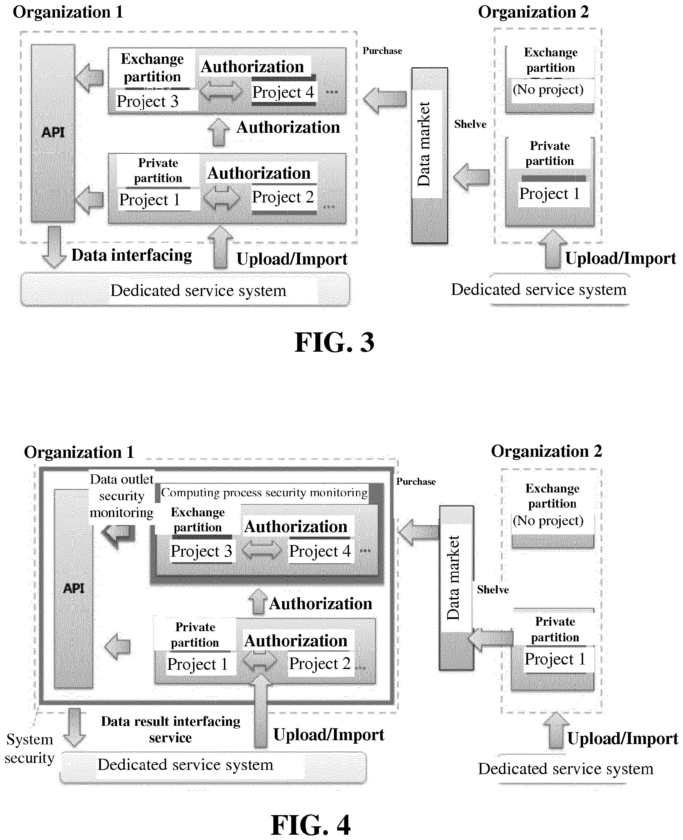

Based on the data exchange support model in the specific embodiment shown in FIG. 2, FIG. 3 is a schematic diagram of the exchange of data information between partitions (across different organizations) in the specific embodiment. It should be noted that data of the private partition of a given organization may be authorized to a project space in the exchange partition or the private partition of the organization. At the same time, the organization may choose to shelve the data in a data market to provide the data to another organization for trading (exchange across organizations). That is, authorization requests, change requests, and presentation requests can be executed for data in the private partition. Data in the exchange partition of the organization can be exchanged between different projects, but cannot be shelved or authorized to the private partition. That is, only authorization requests from the same storage partition can be executed.

It should be noted that, in the preferred embodiments of the present application, new data information uploaded by an organization is preferentially imported into the first storage partition when the storage space of the organization receives new data information. That is, data uploaded or imported by a dedicated service system can only first enter the private partition. Specifically, if a technician of an organization needs to upload data information to a storage space of the organization, a dedicated service system can be used to upload the data to the private partition. If the technician needs to download data information from the storage space of the organization, an API corresponding to the storage space (including the exchange partition and the private partition) needs to be used to initially export the data, and the data information can be completely downloaded only after the dedicated service system and the API are successfully interfaced.

To ensure the data security of data during exchange (especially during trading), security monitoring can be performed for operations on data information in the exchange partition in a specific embodiment of the present application, as shown in FIG. 4. Security monitoring can be performed on the entire computing process in the exchange partition of the organization once data is purchased, and corresponding security monitoring is performed at an interface through which the data is exported by using an API.

S103: The target data information is processed according to the processing strategy and the data processing request.

Data in different data storage partitions of organizations is mainly processed in the backend in the present application. Therefore, during the actual exchange of data, a data migration operation (for example, the data is transferred from a server to another server) does not need to be performed. Instead, view authorization and views are used to achieve the use of data by different organizations or for different projects. Therefore, in the preferred embodiments of the present application, the specific process of performing this step is as follows:
(1) establishing, in the current storage partition of the target data information, a view identical to that of the target data information in the original storage partition after the data processing request is executed if it is determined, according to the processing strategy, to allow execution of the data processing request; and
(2) keeping the view of the target data information in the current storage partition if it is determined, according to the processing strategy, to reject execution of the data processing request.

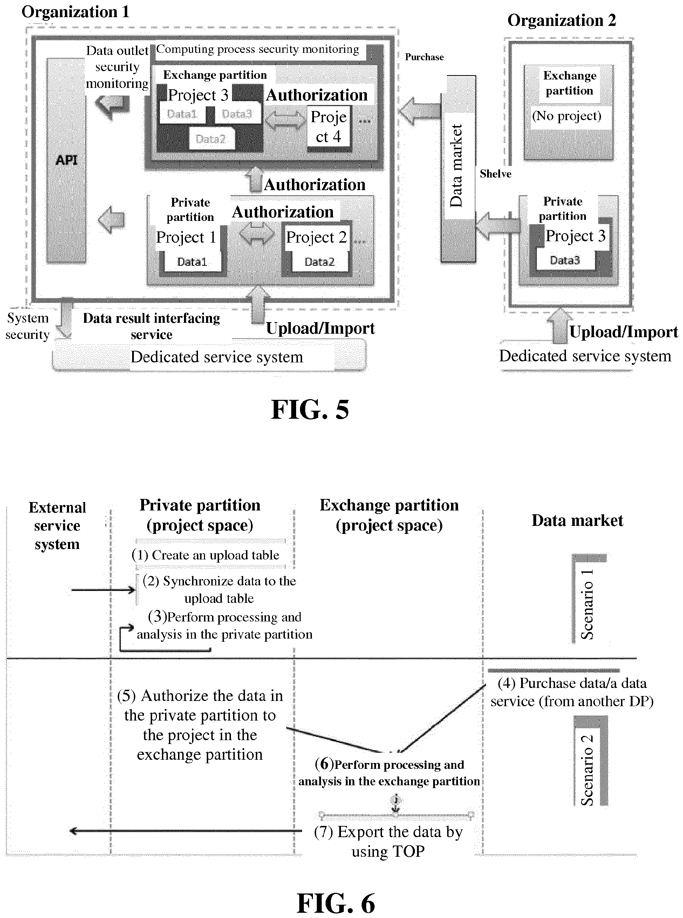

FIG. 5 is a schematic diagram of an authorization strategy for data between partitions according to a specific embodiment of the present application. The authorization of data in a private partition to an exchange partition of the same organization is used as an example. In the specific embodiment, a view Data1' is established in Project 3 in the exchange partition of Organization 1 to complete authorization of the data of data table Data1 of Project 1 in the private partition of Organization 1 in FIG. 5 after authorization of Data1 is requested by Project 3 in the exchange partition and is granted. Correspondingly, in the specific embodiment, a view Data3' is established in Project 3 in the exchange partition of Organization 2 to complete authorization of the data of data table Data 3 after authorization of Data 3 of Project 3 in the private partition of Organization 2 in FIG. 5 is requested by Project 3 in the exchange partition of Organization 1 and is granted.

To further illustrate the technical concept of the present invention, the technical solution of the present invention is described with reference to specific application scenarios.

FIG. 6 is a schematic flowchart of the use of data in an exchange partition (with a private partition) according to a specific embodiment of the present application. An upload table is first created when an organization needs to upload data to the private partition. Subsequently, the data is synchronized to the upload table, and the data is processed and analyzed in the private partition. Subsequently, the data of the private partition is first authorized to a project in the exchange partition when another DP needs to purchase data/a data service of the organization. Subsequently, the data is processed and analyzed in the exchange partition. Finally, a purchasing DP exports the purchased data by using a query layer (a TOP platform provided by a network service provider can be used in a specific application scenario).

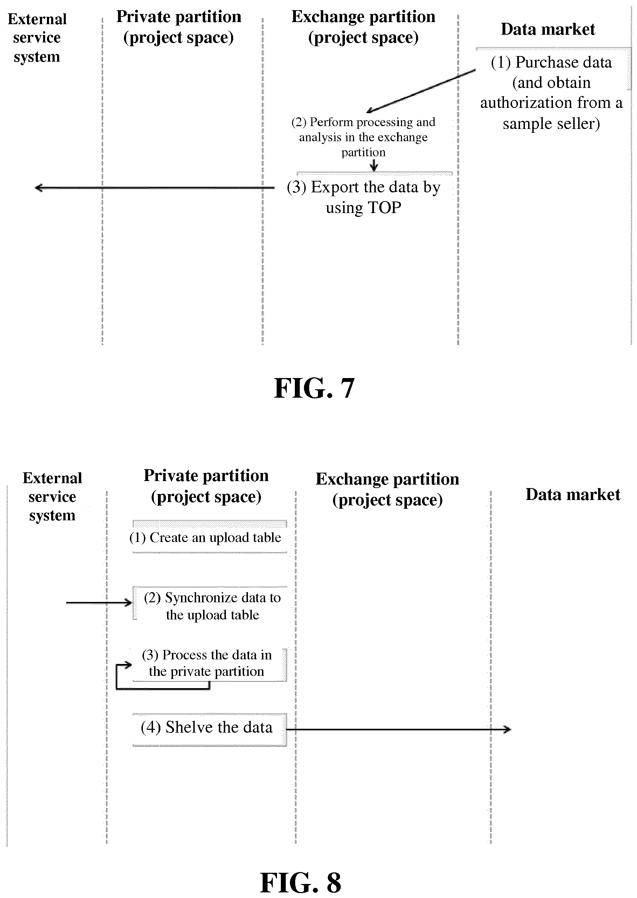

FIG. 7 is a schematic flowchart of the use of data in an exchange partition (without a private partition) according to a specific embodiment of the present application. A DP that purchases data first purchases needed data in a data market, processes and analyzes the purchased data in an exchange partition of the DP, and exports the purchased data by using a query layer.

FIG. 8 is a schematic flowchart of the use of data in a private partition. An upload table is first created when an organization needs to upload data to a private partition. Subsequently, the data is synchronized to the upload table, and the data is processed and analyzed in the private partition. The data is then shelved in a data market after it is confirmed that the data has been completely processed.

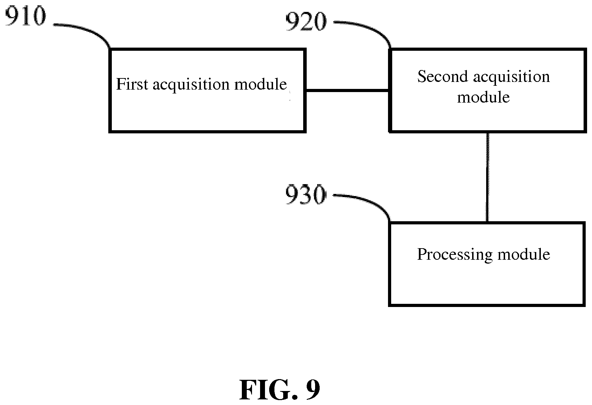

To achieve the foregoing technical objective, the present application further provides a data storage system. As shown in FIG. 9, the data storage system is a data storage system in which a storage space corresponding to an organization is disposed. The storage space includes a first storage partition and a second storage partition. The system includes:
a first acquisition module 910 configured to acquire a data processing request type, the storage partition in which a project sending a data processing request is located, and the storage partition of target data information corresponding to the data processing request when the data processing request is received;
a second acquisition module 920 configured to acquire a processing strategy matching the storage partitions and the type, the processing strategy being preset in the data storage system; and
a processing module 930 configured to process the target data information according to the processing strategy and the data processing request.

In a specific application scenario,
the data processing request is used to authorize the target data information to the project if the data processing request type is an authorization request, to enable the project to access the target data information, the project belonging to the organization;
the data processing request carries target attribute information if the data processing request type is a change request, and the data processing request is used to change attribute information of the target data information to the target attribute information; and
the data processing request is used to present the target data information on a data platform if the data processing request type is a presentation request.

In a specific application scenario, the processing strategy is specifically:
allowing execution of the data processing request if the storage partition of the target data information is the first storage partition when the data processing request is a presentation request or a change request;
allowing execution of the data processing request if the storage partition in which the project is located belongs to the storage space when the data processing request is an authorization request and the storage partition of the target data information is the first storage partition; and
allowing execution of the data processing request if the storage partition in which the project is located belongs to the second storage partition when the data processing request is an authorization request and the storage partition of the target data information is the second storage partition.

In a specific application scenario,
the processing module is further configured to reject and discard the data processing request when a processing strategy matching the storage partitions and the type does not exist.

In a specific application scenario, the system further includes:
an import module configured to import uploaded new data into the first storage partition when the new data is received.

As can be known from this description of implementation manners, persons skilled in the art may clearly understand that the present application may be implemented by using hardware or by using software plus a necessary universal hardware platform. Based on such an understanding, the technical solutions of the present application may be implemented in the form of a software product. The software product may be stored in a non-volatile storage medium (which may be a CD-ROM, a USB flash drive, a removable hard disk, or the like), and includes several instructions for instructing a computer device (which may be a personal computer, a server, a network device, or the like) to perform the methods in the implementation scenarios of the present application.

A person skilled in the art may understand that the accompanying drawings are only schematic diagrams of preferred implementation scenarios. The modules or procedures in the accompanying drawings are not necessarily indispensable for implementing the present application.

A person skilled in the art may understand that the modules in the apparatus in the implementation scenario may be distributed in the apparatus in the implementation scenario according to the description of the implementation scenario, or may be correspondingly changed to be located in one or more apparatuses different from the apparatus in the implementation scenario. The modules in the foregoing implementation scenario may be combined into one module or may further be divided into a plurality of submodules.

The foregoing sequence numbers in the present application are merely for the convenience of description, and do not imply preference among the implementation scenarios.

The foregoing disclosure is only several specific implementation scenarios of the present application, but the present application is not limited thereto. Any change conceivable by a person skilled in the art shall fall within the protection scope of the present application.

## Claims

1. A data information processing method, **characterized in that** the method uses a data storage system, a storage space corresponding to an organization being disposed in advance in the data storage system, the storage space comprising a first storage partition and a second storage partition, and the method comprising:
determining a data processing request type, the storage partition in which a project sending a data processing request is located, and the storage partition of target data information corresponding to the data processing request when the data processing request is received;
acquiring a processing strategy matching the storage partitions and the type, the processing strategy being preset in the data storage system; and
processing the target data information according to the processing strategy and the data processing request.

2. The method according to claim 1, wherein
the data processing request is used to authorize the target data information to the project if the type is an authorization request, to enable the project to access the target data information, the project belonging to the organization;
the data processing request carries target attribute information if the type is a change request, and the data processing request is used to change attribute information of the target data information to the target attribute information; and
the data processing request is used to present the target data information on a data platform if the type is a presentation request.

3. The method according to claim 2, wherein the processing strategy is specifically:
allowing execution of the data processing request if the storage partition of the target data information is the first storage partition when the data processing request is a presentation request or a change request;
allowing execution of the data processing request if the storage partition in which the project is located belongs to the storage space when the data processing request is an authorization request and the storage partition of the target data information is the first storage partition;
allowing execution of the data processing request if the storage partition in which the project is located belongs to the second storage partition when the data processing request is an authorization request and the storage partition of the target data information is the second storage partition; and
rejecting and discarding the data processing request when a processing strategy matching the storage partitions and the type does not exist.

4. The method according to claim 3, wherein the step of processing the target data information according to the processing strategy and the data processing request is specifically:
establishing, in the current storage partition of the target data information, a view identical to that of the target data information in the original storage partition after the data processing request is executed if it is determined, according to the processing strategy, to allow execution of the data processing request; and
keeping the view of the target data information in the current storage partition if it is determined, according to the processing strategy, to reject execution of the data processing request.

5. The method according to claim 1, further comprising:
importing uploaded new data into the first storage partition when the new data is received.

6. A data storage system, **characterized in that** the data storage system is a data storage system in which a storage space corresponding to an organization is disposed, the storage space comprising a first storage partition and a second storage partition, and the system comprising:
a first acquisition module configured to acquire a data processing request type, the storage partition in which a project sending a data processing request is located, and the storage partition of target data information corresponding to the data processing request when the data processing request is received;
a second acquisition module configured to acquire a processing strategy matching the storage partitions and the type, the processing strategy being preset in the data storage system; and
a processing module configured to process the target data information according to the processing strategy and the data processing request.

7. The system according to claim 1, further comprising:
the data processing request is used to authorize the target data information to the project if the data processing request type is an authorization request, to enable the project to access the target data information, the project belonging to the organization;
the data processing request carries target attribute information if the data processing request type is a change request, and the data processing request is used to change attribute information of the target data information to the target attribute information; and
the data processing request is used to present the target data information on a data platform if the data processing request type is a presentation request.

8. The system according to claim 7, wherein the processing strategy is specifically:
allowing execution of the data processing request if the storage partition of the target data information is the first storage partition when the data processing request is a presentation request or a change request;
allowing execution of the data processing request if the storage partition in which the project is located belongs to the storage space when the data processing request is an authorization request and the storage partition of the target data information is the first storage partition; and
allowing execution of the data processing request if the storage partition in which the project is located belongs to the second storage partition when the data processing request is an authorization request and the storage partition of the target data information is the second storage partition.

9. The system according to claim 8, wherein
the processing module is further configured to reject and discard the data processing request when a processing strategy matching the storage partitions and the type does not exist.

10. The system according to claim 6, further comprising:
an import module configured to import uploaded new data into the first storage partition when the new data is received.
